# EUROPÄISCHE PATENTSCHRIFT

(11) **EP 3 057 788 B1**
(45) Veröffentlichungstag und Bekanntmachung des Hinweises auf die Patenterteilung: **12.07.2017**
(21) Anmeldenummer: 14796663.4
(22) Anmeldetag: 08.10.2014
(51) Int. Cl.: B32B 5/18, B32B 27/00, B32B 27/06, B32B 27/30, B32B 27/32, F16L 59/14

(54) **ROHR, INSBESONDERE FERNWÄRMEROHR**
PIPE, MORE PARTICULARLY A DISTRICT HEATING PIPE
TUYAU, EN PARTICULIER TUYAU DE CHAUFFAGE URBAIN

(30) Priorität: 14.10.2013 AT 506622013
(43) Veröffentlichungstag der Anmeldung: 24.08.2016
(73) Patentinhaber: KE KELIT Kunststoffwerk Gesellschaft m.b.H., 4020 Linz (AT)
(72) Erfinder: SCHLÖGL, Sandra, A-8152 Stallhofen (AT); RIESS, Gisbert, A-8700 Leoben (AT); KRAMER, Rebecca, 84032 Altdorf (DE)
(74) Vertreter: Patentanwaltskanzlei Hübscher
(86) Internationale Anmeldenummer: PCT/AT2014/050236
(87) Internationale Veröffentlichungsnummer: WO 2015/054713

(56) Entgegenhaltungen:
- EP-A1- 0 294 310
- EP-A1- 2 340 929
- WO-A1-96/05464
- WO-A1-2011/047394

## Beschreibung

### Technisches Gebiet

Die Erfindung bezieht sich auf Rohr, insbesondere Fernwärmerohr, mit einem Mediumrohr und einer das Mediumrohr umhüllenden Isolierung, insbesondere aus Polyurethanschaum, wobei Medienrohr und Isolierung in ein thermoplastisches Mantelrohr eingebettet sind und wobei die Isolierung rohrstirnseitig mit einem Sperrpolymer ausgestattet ist.

### Stand der Technik

Es ist bekannt, dass das Alterungsverhalten des Dämmstoffes Polyurethanschaum in einem Rohrsystem stark von den Betriebsbedingungen und davon abhängt, ob ein Gasaustausch (Penetration) durch das Mantelrohr stattfinden kann. Ein derartiger Zellgasaustausch reduziert die Dämmwirkung, weil langfristig das für die Wärmedämmung günstige Zellgas (z.B. Pentan, Cyclopentan, Isobutan, etc.) gegen durch das Mantelrohr dringende Luft und Luftsauerstoff ausgetauscht wird. Dieser Sauerstoff bewirkt in weiterer Folge im PUR-System eine Oxidation und somit einen beschleunigten Alterungsprozess des Gesamtsystems, der wiederum die mechanischen Eigenschaften des Rohrsystems negativ beeinflusst, wie Dämmeigenschaften, mechanische Festigkeiten in axialer und tangentialer Richtung (Scherfestigkeiten) sowie die Druckfestigkeit gegenüber äußere Einflüsse wie z.B. die Erdlast.

Die Verringerung der Isoliereigenschaften führt unweigerlich zu Wärmeverlusten im Fernwärmenetz. Alle diese Alterungsprozesse können verlangsamt oder im günstigsten Fall unterbunden werden, wenn das Mantelrohr vorzugsweise aus PE-HD hergestellt wird und eine gasdichte Sperrschicht vorgesehen wird.

Solche Sperrschichten können metallische Sperrschichten sein. Bevorzugt werden Schichten aus Kupfer oder Aluminiumfolie verwendet, die zwischen Isolierung und Mantelrohr vorgesehen sind. Ein Gasaustausch kann beim vorsehen einer solchen umfangsseitig geschlossenen metallischen Schicht dann nicht mehr stattfinden. Es hat sich aber gezeigt, dass ein erheblicher Teil des Zellgases schon nach der Fertigung der Rohre, während der Lagerung, über die Stirnflächen der Rohre entweicht. Das Zellgas wird dabei durch Stickstoff und Sauerstoff substituiert. Der eindringende Sauerstoff führt darüber hinaus zu einem Abbau des Schaums (Oxidation), was eine negative Änderung der physikalischen Eigenschaften der Isolierung zur Folge hat.

Ein Rohr der eingangs geschilderten Art, also ein Rohr mit einem Mediumrohr und einer das Mediumrohr umhüllenden Isolierung aus Polyurethanschaum offenbart die EP 2 340 929 A1. Die Gaspermeationssperrschicht ist aus EVOH, da diese Materialien porenfrei und chemikalien- und witterungsbeständig sindund sich ferner gut in das Kunststoffaußenrohr integrieren lassen. Eine solche, aus EVOH bestehende Gaspermeationssperrschicht kann insbesondere zusammen mit einer oder mehreren Schichten des Kunststoffaußenrohres koextrudiert werden. Eine derartige Gaspermeationsschicht kann mindestens einer Stirnseite des Rohres zugeordnet sein.

Die EP 0 294 310 A1 offenbart ein Rohr mit einer Isolierung aus Basaltfasern. Polyurethanringe sind dafür vorgesehen die Gesamtleitung in viele wasserdichte Wärmeleitungssektoren zu unterteilen bzw. das Kupferrohr im Außenmantel zu zentrieren. Die Stirnflächen der Ringe weisen zwar einen Spezialanstrich gegen Feuchtigkeit auf.

Die WO 96/05464 A1 zeigt ein Rohr mit einem Mediumrohr und einer das Mediumrohr umhüllenden Isolierung aus Polyurethanschaum. Um das Rohr biegsamer zu gestalten sind zwischen benachbarten Stirnflächen, von die Isolierung bildenden Halbschalen aus Polyurethanschaum, Weichschaumringe aus Polyethylen angeordnet, die Längenänderungen bei einem Verbiegen des isolierten Rohres aufnehmen können.

### Darstellung der Erfindung

Der Erfindung liegt somit die Aufgabe zugrunde, ein Rohr der eingangs geschilderten Art zu schaffen, bei dem ein Austausch des Zellgases verbessert unterbunden wird.

Gemäß der Erfindung ist vorgesehen, dass das Sperrpolymer, nämlich eine auf die Isolierung aufgebrachte, einen Austausch des Zellgases unterbindende, diffusionsdichte Lackschicht, kovalent mit der Isolierung verbunden ist. Damit können Diffusionsvorgänge an der Stirnseite des Rohres von Beginn an unterbunden werden und kann die Isolierung, insbesondere ein Polyurethanschaum, vor Oxidation geschützt und der Lambda-Wert (Wärmedämmbeiwert) konstant gehalten werden.

Hierzu ist es notwendig ein Material als Sperrpolymer einzusetzen, welches gegenüber Sauerstoff und Treibgasen (in der Regel Kohlenwasserstoffe, z.B. Cyclopentan) gleichermaßen diffusionsdicht ist. Um eine gute Barriere gewährleisten zu können ist es vorgesehen, dass sich das Barrierematerial mit der Isolierung chemisch verbindet. Durch die chemische Bindung wird eine vollflächige dauerhafte Abdichtung der Stirnseite gewährleistet, die nicht durch Transport etc. verloren gehen kann. Für das Barrierematerial wird insbesondere ein Sperrpolymer gewählt, welches wasserlöslich und biokompatibel ist. Die chemische Struktur des Sperrpolymers soll einerseits eine hohe Sperrwirkung bewirken und andererseits eine kovalente Bindung zum Schaummaterial gewährleisten, was wiederum vorteilhaft für die Barrierewirkung ist. Zudem kann das Sperrpolymer mit einem Farbstoff versetzt sein, um in Hinblick auf eine Qualitätskontrolle einen defektfreien und homogenen Auftrag des Sperrpolymers prüfen zu können.

Das Barrierematerial auf der Stirnseite eines Rohres kann gegebenenfalls nur für eine Zwischenlagerung, von der Produktion bis zum Einbau des Rohre, gedacht sein, um die Permeation des Treibgases während der Zwischenlagerung der Rohre wirksam zu verhindern. Vor einem Verlegen der Rohre kann das Barrierematerial bei Bedarf entfernt werden, wozu das Barrierematerial eine Festigkeit aufweisen sollte, die ein Abziehen des Sperrpolymeres erlaubt.

Zur einfachen Ausstattung des Rohres mit dem Sperrpolymer ist das Sperrpolymer eine auf die Isolierung aufgebrachte Lackschicht ist. Ein gelöstes Sperrpolymer kann somit problemlos auf die Stirnfläche des Rohres aufgetragen werden. Beispielsweise aufgestrichen oder aufgesprüht.

Als Basismaterial für das Sperrpolymer empfehlen sich Polyvinylalkohol und/oder wenigstens einem Copolymer davon. Gegebenenfalls ist es von Vorteil, wenn das Sperrpolymer aus wenigstens einem Polyamin besteht. Polymere mit Sperreigenschaften, wie zum Beispiel Polyvinylalkohol und deren Copolymere (z.B. mit Ethylen, Vinylacetat, Aminen) oder Polyamine werden in Lösung gebracht und auf die Isolierung im Bereich der Rohrstirnfläche aufgebracht. Je nach verwendetem Polymer kann das Lösungsmittel im einfachsten Fall Wasser sein.

Das Polymer bindet sich kovalent an den Polyurethanschaum der Isolierung. Nachdem das Lösungsmittel vollständig verdampft ist, bleibt eine chemisch an die Isolierung gebundene Sperrschicht auf der Schaumoberfläche zurück. Durch den Einsatz von entsprechen Wärmequellen (IR Strahler, Heißluftgebläse) kann die Zeit bis zum vollständigen Verdampfen des Lösungsmittels stark verkürzt werden.

Ein Sonderfall ergibt sich bei wasserlöslichen Sperrpolymeren. Hier muss über entsprechende chemische Zusatzstoffe eine Vernetzung des Sperrpolymeranstriches sichergestellt werden, damit dieser nicht durch ungünstige Umgebungseinflüsse (Luftfeuchte, Regen, u. dgl.) wieder in Lösung geht und die Sperrwirkung verliert.

Die Vernetzung kann beispielsweise über thermische (u.a. Maleinsäureanhydrid oder Polyacrylsäure) oder photochemische (u.a. FeCl₃) Vernetzungsadditive erfolgen, die dem Sperrpolymer zugesetzt sind.

Des Weiteren ist es von Vorteil die Sperrpolymerlösung einzufärben, um optisch kontrollieren zu können, ob der Auftrag vollflächig erfolgt ist.

Die Viskosität wird vorzugsweise derart eingestellt, dass ein Verrinnen des noch flüssigen, bzw. zähflüssigen, Sperrschicht zwischen Auftrag und Aushärten in Folge der Schwerkraft und somit auch ein Abtropfen während der Trocknungsphase verhindert wird. Dies erfolgt insbesondere dadurch, dass das Sperrpolymer mit einem Verdickungsmittel, wie pyrogener Kieselsäure, Polyvinylpyrrolidon, Aliginat, Hemicellulose, Stärkeether oder Polyacrylat ausgestattet ist.

Zwischen Isolierung und thermoplastischem Mantelrohr ist vorzugsweise eine Sperrpolymerschicht aus PVOH vorgesehen. Gegebenenfalls ist die Isolierung von einer Sperrpolymerschicht aus PVOH umschlossen bzw. ummantelt, die ggf. auch im Mantelrohr eingebettet sein kann. Diese einfache und günstige, aber leider nicht wasserfeste Sperrschicht kann verwendet werden, weil das Sperrpolymer rohrstirnseitig mit der Isolierung kovalent verbunden ist und einen Wassereintritt verhindert. Üblicherweise ist zwischen Isolierung und thermoplastischem Mantelrohr eine Sperrpolymerschicht aus EVOH vorgesehen Die Glasübergangstemperatur von EVOH liegt unter 70 °C, die von PVOH zwischen 180 und 190 °C. Es hat sich herausgestellt, dass die Barriereeigenschaften von EVOH bei 70 °C stark beeinträchtigt werden. Um die Barriereeigenschaften in jedem Fall zu gewährleisten empfiehlt es sich die Sperrpolymerschicht aus PVOH vorgesehen.

### Ausführungsbeispiele für das Sperrpolymer aus einer

### Polyvinylalkohol-Lösung:

5 - 15 g Polyvinylalkohol werden mit 85 - 95 g deionisiertem Wasser gemischt und für 4 h bei rund 80 °C gerührt.

Für die Herstellung einer 10 Gew.-%igen Polyvinylalkohol-Lösung werden 10 g Polyvinylalkohol-Granulat und 90 g deionisiertes Wasser gemischt und für vier Stunden bei 80 °C gerührt.

### Polyvinylalkohol-Lösung mit Vernetzer:

5 - 15 g Polyvinylalkohol werden mit 85 - 95 g deionisiertem Wasser gemischt und für 4 h bei rund 80 °C gerührt. Anschließend wird ein Vernetzer hinzugefügt und die Lösung für 1 h bei 70 °C gerührt. Geeignete Vernetzer wären a.) eine 0,29 g (1 Gew.-%), 0,58 g (2 Gew-%) oder 1,5 g (5 Gew.-%) 35 Gew.-%ige Polyacrylsäure-Lösung oder b.) 0,1 g (1 Gew.-%), 0,2 g (2 Gew.-%) oder 0,5 g (5 Gew.-%) Maleinsäureanhydrid.

Für die Herstellung einer 10 Gew.-%igen Polyvinylalkohol-Lösung mit Vernetzer werden 10 g Polyvinylalkohol-Granulat und 90 g deionisiertes Wasser gemischt und für vier Stunden bei 80 °C gerührt. Anschließend wird der Vernetzer in die Polyvinylalkohol-Lösung eingerührt.

### Polyvinylalkohol-Lösung mit Verdickungsmittel:

5 - 15 g Polyvinylalkohol werden mit 85 - 95 g deionisiertem Wasser gemischt und für 4 h bei rund 80 °C gerührt. Anschließend wird das Verdickungsmittel in die Polyvinylalkohol-Lösung eingerührt.

### Kurze Beschreibung der Zeichnung

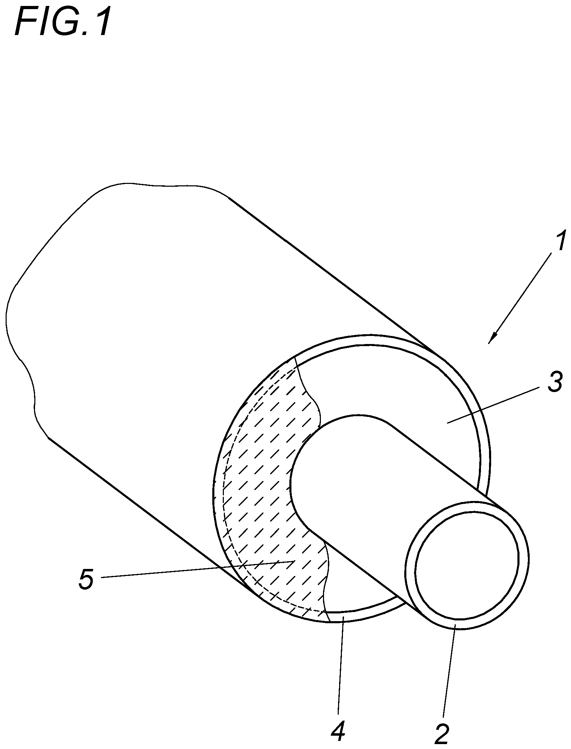

In der Zeichnung ist der Erfindungsgegenstand beispielsweise dargestellt. Es zeigen
Fig. 1 einen Abschnitt eines erfindungsgemäßen Rohres in Schrägansicht und

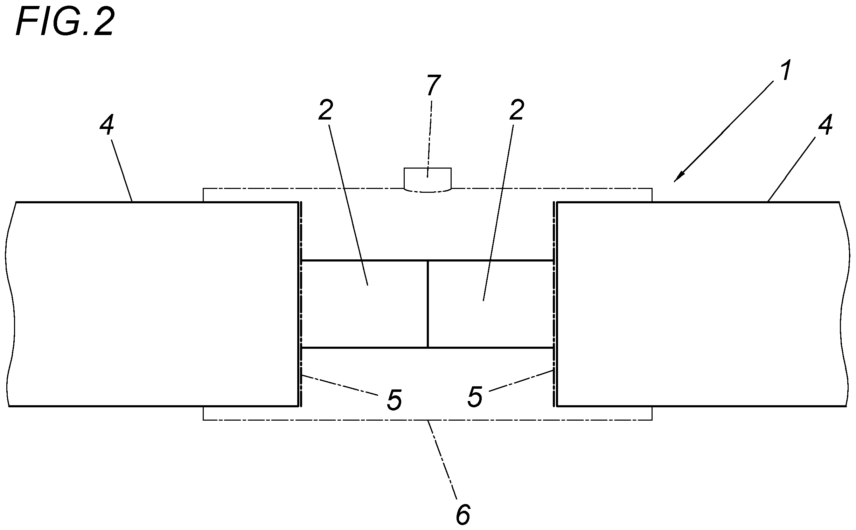

Fig. 2 ein Montagebeispiel zweier erfindungsgemäßer Rohre in Ansicht.

### Weg zur Ausführung der Erfindung

Das Rohr 1, insbesondere ein Fernwärmerohr, besteht unter anderem aus einem Mediumrohr 2 und einer das Mediumrohr 2 umhüllenden Isolierung 3, vorzugsweise aus Polyurethanschaum. Das Medienrohr 2 und die Isolierung 3 sind in ein thermoplastisches Mantelrohr 4 eingebettet, wobei zwischen Isolierung 2 und Mantelrohr 4 gegebenenfalls eine Gassperre in Form einer diffusionsdichten Folie, insbesondere einer Metallfolie, vorgesehen sein kann.

Die Isolierung 2 ist rohrstirnseitig mit einem kovalent mit der Isolierung 2 verbundenen Sperrpolymer 5 ausgestattet. Das Sperrpolymer 5 ist eine in Üblicher Weise wenigstens auf die Isolierung 2 aufgebrachte Lackschicht, die einen Austausch des Zellgases der Isolierung unterbindet.

Im Montagebeispiel sind zwei Rohre 2 zusammengeschlossen. Dazu sind die Medienrohre 2 miteinander verschweißt. Zur Vereinfachung dieses Montageschrittes stehen die Medienrohre stirnseitig über die Isolierungs- und Mantelrohrstirnfläche vor. Der sich nach einem verschweißen der zwei Rohre 2 ergebende Freiraum zwischen den Isolierungs- und Mantelrohrstirnflächen der beiden Rohre wird mit einer Muffe 7 überdeckt, die gegebenenfalls über eine Einfüllöffnung 7 mit einem Schaumstoff ausgeschäumt wird. Der Freiraum kann aber mit beliebigem Dämmmaterial, wie auch Dämmwolle, ausgestattet sein.

## Patentansprüche

1. Rohr (1), insbesondere Fernwärmerohr, mit einem Mediumrohr (2) und einer das Mediumrohr (2) umhüllenden Isolierung (3) aus Polyurethanschaum, wobei Medienrohr (2) und Isolierung (3) in ein thermoplastisches Mantelrohr (4) eingebettet sind und wobei die Isolierung (3) rohrstirnseitig mit einem Sperrpolymer ausgestattet ist, **dadurch gekennzeichnet, dass** das Sperrpolymer (5), nämlich eine auf die Isolierung (3) aufgebrachte, einen Austausch des Zellgases unterbindende, diffusionsdichte Lackschicht, kovalent mit der Isolierung (3) verbunden ist.

2. Rohr (1) nach Anspruch 1, **dadurch gekennzeichnet, dass** das Sperrpolymer (5) aus Polyvinylalkohol und/oder aus wenigstens einem Copolymer davon besteht.

3. Rohr (1) nach Anspruch 1, **dadurch gekennzeichnet, dass** das Sperrpolymer (5) aus wenigstens einem Polyamin besteht.

4. Rohr (1) nach einem der Ansprüche 1 bis 3, **dadurch gekennzeichnet, dass** das Sperrpolymer (5) Vernetzungsadditive, wie Maleinsäureanhydrid, Polyacrylsäure oder FeCl₃ aufweist.

5. Rohr (1) nach einem der Ansprüche 1 bis 4, **dadurch gekennzeichnet, dass** das Sperrpolymer (5) mit einem Verdickungsmittel, wie pyrogener Kieselsäure, Polyvinylpyrrolidon, Aliginat, Hemicellulose, Stärkeether oder Polyacrylat ausgestattet ist.

6. Rohr (1) nach einem der Ansprüche 1 bis 5, **dadurch gekennzeichnet, dass** zwischen Isolierung (3) und thermoplastischem Mantelrohr (4) eine Sperrpolymerschicht aus PVOH vorgesehen ist.

7. Rohr (1) nach einem der Ansprüche 1 bis 6, **dadurch gekennzeichnet, dass** die Isolierung (3) von einer Sperrpolymerschicht aus PVOH umschlossen ist.

## Claims

1. Pipe (1), in particular a district heating pipe, comprising a media pipe (2) and lagging (3) consisting of polyurethane foam surrounding the media pipe (2), wherein the media pipe (2) and the lagging (3) are embedded into a thermoplastic casing pipe (4) and wherein the lagging (3) is provided on the front face of the pipe with a barrier polymer, **characterised in that** the barrier polymer (5), namely a diffusion-resistant lacquer layer which is applied to the lagging (3) and prevents the cell gas from being exchanged, is covalently bonded to the lagging (3).

2. Pipe (1) as claimed in claim 1, **characterised in that** the barrier polymer (5) consists of polyvinyl alcohol and/or of at least one copolymer thereof.

3. Pipe (1) as claimed in claim 1, **characterised in that** the barrier polymer (5) consists of at least one polyamine.

4. Pipe (1) as claimed in any one of claims 1 to 3, **characterised in that** the barrier polymer (5) has cross-linking additives, such as maleic acid anhydride, polyacrylic acid or FeCl₃.

5. Pipe (1) as claimed in any one of claims 1 to 4, **characterised in that** the barrier polymer (5) is provided with a thickening agent, such as pyrogenic silica, polyvinylpyrrolidone, alginate, hemicellulose, starch ether or polyacrylate.

6. Pipe (1) as claimed in any one of claims 1 to 5, **characterised in that** a barrier polymer layer consisting of PVOH is provided between the lagging (3) and thermoplastic casing pipe (4).

7. Pipe (1) as claimed in any one of claims 1 to 6, **characterised in that** the lagging (3) is enclosed by a barrier polymer layer consisting of PVOH.

## Revendications

1. Tuyau (1), en particulier tuyau de chauffage urbain, avec un tuyau de fluide (2) et une isolation (3), en mousse de polyuréthane, entourant le tuyau de fluide (2), le tuyau de fluide (2) et l'isolation (3) étant incorporés dans un tuyau de gainage (4) thermoplastique et l'isolation (3) étant munie côté frontal du tuyau d'un polymère barrière, **caractérisé en ce que** le polymère barrière (5), à savoir une couche de vernis, étanche à la diffusion, empêchant un échange de gaz cellulaire, appliquée sur l'isolation (3), est lié par covalence à l'isolation (3).

2. Tuyau (1) selon la revendication 1, **caractérisé en ce que** le polymère barrière (5) est composé d'alcool polyvinylique et/ou au moins d'un copolymère.

3. Tuyau (1) selon la revendication 1, **caractérisé en ce que** le polymère barrière (5) est composé au moins d'une polyamine.

4. Tuyau (1) selon l'une des revendications 1 à 3, **caractérisé en ce que** le polymère barrière (5) présente des additifs réticulants, comme de l'anhydride maléique, de l'acide polyacrylique ou du FeCl₃.

5. Tuyau (1) selon l'une des revendications 1 à 4, **caractérisé en ce que** le polymère barrière (5) est muni d'un agent épaississant, comme de l'acide silicique pyrogéné, du polyvinylpyrrolidone, de l'alginate, de l'hémicellulose, de l'éther d'amidon ou du polyacrylate.

6. Tuyau (1) selon l'une des revendications 1 à 5, **caractérisé en ce qu'**il est prévu une couche de polymère barrière en PVOH, entre l'isolation (3) et le tuyau de gainage (4) thermoplastique.

7. Tuyau (1) selon l'une des revendications 1 à 6, **caractérisé en ce que** l'isolation (3) est entourée d'une couche de polymère barrière en PVOH.
